Europäisches Patentamt

European Patent Office

Office européen des brevets

(19)

(11) Publication number : **0 393 773 B1**

# EUROPEAN PATENT SPECIFICATION

(12)

(45) Date of publication of patent specification :
**11.03.92 Bulletin 92/11**

(51) Int. CI.⁵ : **B65G 17/34**

(21) Application number : **90200922.4**

(22) Date of filing : **13.04.90**

---

(54) **Conveyor.**

---

(30) Priority : **19.04.89 NL 8900975**

(43) Date of publication of application :
**24.10.90 Bulletin 90/43**

(45) Publication of the grant of the patent :
**11.03.92 Bulletin 92/11**

(84) Designated Contracting States :
**AT BE CH DE DK ES FR GB GR IT LI LU NL SE**

(56) References cited :
**FR-A- 2 475 015**
**GB-A- 2 140 371**
**US-A- 3 231 068**

(73) Proprietor : **RAPISTAN VAN DER LANDE B.V.**
**Vanderlandelaan 2, Postbus 18**
**NL-5460 AA Veghel (NL)**

(72) Inventor : **van den Goor, Jakobus Marie**
**Boxhornpad 6**
**NL-5641 WG Eindhoven (NL)**

(74) Representative : **Noz, Franciscus Xaverius, Ir.**
**et al**
**Algemeen Octrooibureau P.O. Box 645**
**NL-5600 AP Eindhoven (NL)**

## Description

The invention relates to a conveyor provided with a frame, with an endless carrying means supported by the frame, which can be driven in its longitudinal direction, and with a plurality of carriers coupled to said carrying means, which are each suitable for accommodating one or more objects, and which are each provided with a displacement means, which can be driven by means of a motor provided on the carrier and by means of which an object present on a carrier can be moved transversely to the longitudinal direction of the carrying means.

When such a conveyor is used objects to be transported are placed on the carriers at one or more stations, whilst in one or more other stations the displacement means of the carriers are operated for delivering the objects transported to another conveyor or to a storage bin or the like.

With the known conveyors use is generally made of an electromotor, to which current is supplied by means of conductor rails extending parallel to the longitudinal direction of the endless carrying means, and slide contacts or the like (FR-A-2,475,015 (Figure 2); GB-A-2,140,371) moving along said rails. This leads to a complicated construction, whereby much attention must be paid to the insulated arrangement of the conductor rails, in order to prevent that the device itself becomes alive and/or that personnel operating the conveyor or the like come into contact with the conductor rails during operation. In addition to this it has appeared in practice that the slide contacts are very liable to wear, so that such a known device requires a great deal of maintenance and repair work, which not only increases the cost of maintenance, but also entails that the conveyor is regularly put out of commission, with all the consequent disadvantages.

The aim of the invention is to obtain a conveyor of the above kind, wherein the above disadvantages can be avoided.

According to the invention this can be achieved in that each carrier is provided with a means generating energy for driving the motor, whereby the driving of the energy generating means is effected by the relative movement between the carrier and the frame when the carrying means is being driven.

When an electromotor is used for driving the displacement means a current generator may constitute the energy generating means. When on the other hand the motor is a hydraulic motor a hydraulic pump may be used as an energy generating means.

It is noted that from the above FR-A-2,475,015 there is furthermore known an embodiment wherein each carrier is provided with a mechanism which co-operates with the displacement means formed by an endless belt for moving said displacement means with respect to the carrier. For operating the mechanism guide means, in the shape of guide strips extending obliquely to the direction of movement of the carrying means and being fixed to the frame, are provided at desired places. Apart from its complicated design such a construction will produce a great deal of noise during operation, which is generally undesirable, whilst furthermore much wear will occur on the co-operating parts being in engagement with each other.

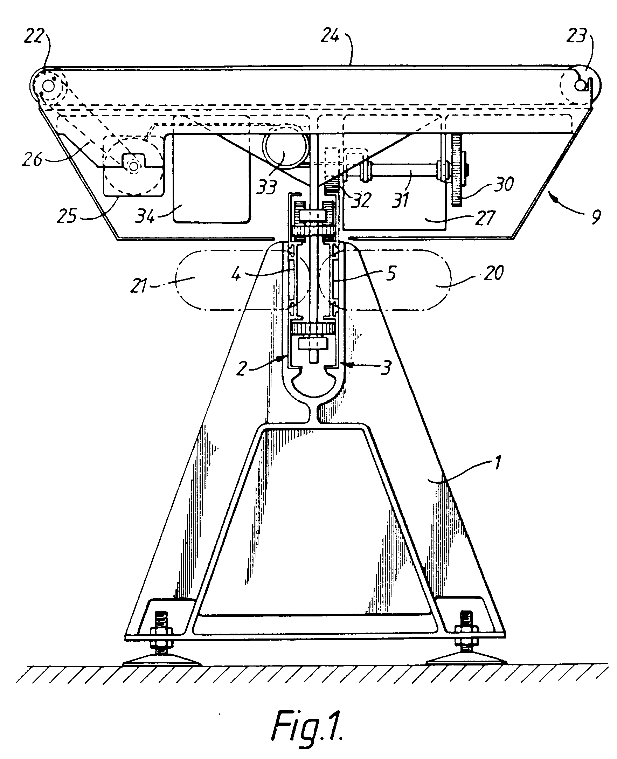

From US-A-3,231,068 there are furthermore known four embodiments of a conveyor which is equipped with transverse transporters, by means of which objects can be moved transversely to the direction of movement of the conveyor. In a first embodiment (Figures 1 - 6) said transverse transporters are driven, at the location of a discharge station, by means of racks which co-operate with pinions, which in their turn are coupled to pulleys and belts 40 for driving the transverse transporter.

In a further embodiment (Figures 7 - 9) proposed in said US Patent the drive of a transverse transporter is effected by means of a pivotal lever which can be pivoted as desired by an upwardly movable pin. Wen said pin comes into the path of movement of the lever said lever will be pivoted in order to effect a movement of the transverse transporter.

Figures 10 - 12 of said US Patent Specification illustrate an embodiment wherein the transverse transporters can be driven via conical gear transmissions and vertically adjustable racks.

Said embodiments have a complicated and heavy construction, they will produce a great deal of noise during operation and will be very liable to wear.

A fourth embodiment proposed in US-A-3,231,068 (Figure 14) at least substantially corresponds with the embodiments according to FR-A-2,475,015 (Figure 2) and GB-A-2,140,371 and consequently has the above-mentioned disadvantages of said known devices.

The invention will be further explained hereinafter, with reference to an embodiment of a possible construction of a device according to the invention diagrammatically illustrated in the accompanying figures.

Figure 1 is a diagrammatic cross-section of a device according to the invention.

Figure 2 is a side elevational view of a part of the endless carrying means and a carrier of the conveyor illustrated in Figure 1 coupled thereto.

Figure 3 is a perspective view of a part of the endless carrying means and carriers coupled thereto.

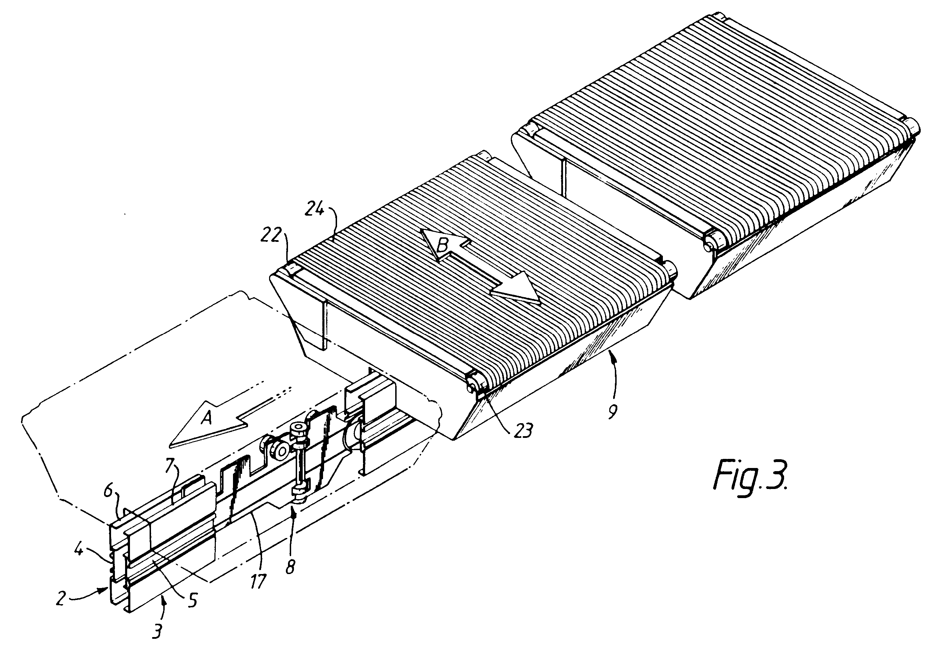

The embodiment of the conveyor according to the invention illustrated in the figures comprises a plurality of stands 1 arranged spaced from each other, which support a guide rail formed by two profile beams 2 and 3, which guide rail will form a closed loop in a manner known per se. As furthermore appears from Figures 1 and 3 the profile beams are at least substantially formed by vertical webs 4 and 5 respectively, and strip-shaped ribs 6 and 7 respectively being integral with said webs and extending perpendicularly to said webs, said ribs extending from the webs 4 and 5 respectively in a direction towards one another.

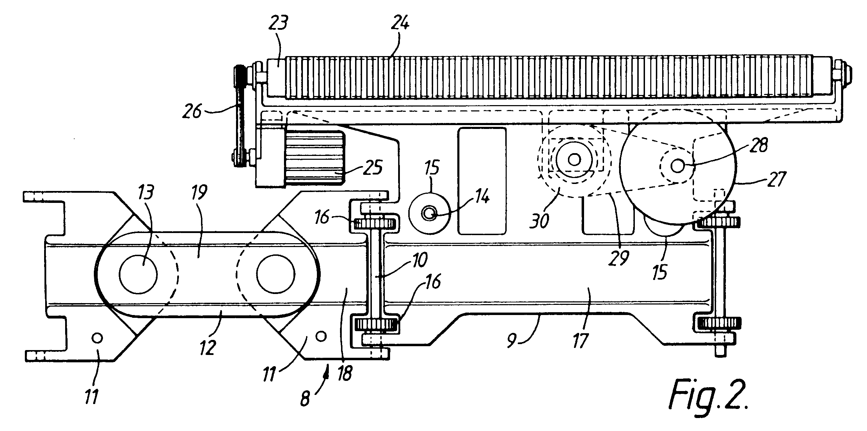

The device furthermore comprises and endless carrying means 8, which is provided with a plurality of spaced link parts 9. To the ends of said link parts there are coupled further link parts 11, by means of pins 10 extending perpendicularly to the longitudinal direction of the link parts and extending vertically, when seen in Figure 2, in such a manner that the link parts 9 and 11 can pivot relative to each other about the central axes of the pins 10.

Two link parts 11, which are coupled to the facing ends of successive link parts 9 in the carrying means 8, are mutually connected by means of links 12, which are pivotally coupled to the relevant link parts 11 by means of studs 13 extending perpendicularly to the pins 10. As furthermore appears from Figure 2 rolls 15, rotable about axes 14 extending parallel to the pins 13, are coupled to the link parts 9. Rolls 16, arranged near the lower or upper ends of the pins 10, as the case may be, are furthermore rotatable about the pins 10.

The endless carrying means 8 formed by the link parts 9 and 11 and the links 12 is arranged between the two profile beams 2 and 3 forming the conductor rail for the carrying means 8. The guide rolls 15 are supported on ribs 6 and 7 of the profile beams 2 and 3 thereby, whilst the guide rolls 16 co-operate with the facing boundary planes of the webs 4 and 5 of the profile beams 2 and 3. It will be apparent, that thus the guide rolls 15 and 16 ensure a good guiding of the carrying means 8 in the rail formed by the profile beams 2 and 3, when during operation the carrying means 8 is moved, by means of a driving means to be described hereinafter, in the direction according to arrow A.

Since the various parts 9, 11 and 12 of the endless carrying means are coupled by means of pins 10 and 13 crossing each other perpendicularly, the endless means may be led along a path which may be deflected both horizontally and vertically.

When e.g. a carrying means is only moved in a horizontal plane merely the pins 10 would suffice, whilst in case the carrying means 8 is only moved in a vertical plane, merely the pins 13 for mutually coupling the various parts of the carrying means 8 might serve.

The link parts 9 and 11 and the links 12 are on both sides provided with flat boundary planes 17, 18 and 19 respectively, said boundary planes being in line and extending along at least part of the height of said parts and in the longitudinal direction of said parts. Wheels 20 and 21, arranged on both sides of the carrying means 8 and supported by the frame engage said boundary planes, as is indicated by dotted lines in Figure 1. Preferably at least the peripheral surface of said wheels is slightly resilient. Wheels having pneumatic tyres can be efficiently used. At least one of the wheels 20 or 21 can be driven, by means of a motor (not shown), in order to effect a movement of the carrying means 8 in the direction according to arrow A.

As furthermore appears from Figure 2 the link part 9 forms a carrier which supports a pair of rolls 22 and 23 near its upper end in the illustrated embodiment. The central axes of said rolls, which are arranged near the sides of the link part or carrier 9, extend parallel to the longitudinal axis of the endless carrying means 8. An endless conveyor belt 24 is carried over said rolls in the illustrated embodiment, the width of said endless conveyor belt substantially corresponding with the length of the upper part of the carrier 9.

Each carrier supports an electromotor 25, which is coupled to the roll 22 by means of a belt drive 26.

A current generator 27 is furthermore secured to the carrier 9. On the outstanding shaft of the current generator there is mounted a gear 28, which is coupled to a gear 30 via a toothed belt 29, said gear 30 being secured to a shaft 31 supported by the carrier 9. To the end of the shaft 31 remote from the gear 30 there is secured a wheel 32 supported on the upper flange 7 of the profile beam 3.

It will be apparent that when the carrying means 8 with the carriers 9 fixed thereto is moved in the direction according to arrow A, the wheel 32 coupled to a carrier will roll on the upper flange of the profile beam 3, and as a result will drive the generator 27 for generating current. Said current may be supplied to e.g. a battery or capacitor 33 mounted on the carrier. The battery or capacitor 33 is coupled to the driving motor 25 via a control mechanism 34 provided on the carrier 9. By supplying current accumulated in the battery or capacitor 33 to the motor 25 by means of the control mechanism 34 the conveyor belt 24 can be driven in the one or the other direction, as indicated by means of the arrow 8 in Figure 3.

When a device such as the one described above is used one or more objects can be placed, in one or more stations, on the carriers 9 led along said stations, by placing said objects, in a manner known per se, on the conveyor belts 24 of the carriers 9 by means of additional conveyors, by hand or the like. For discharging said objects the displacement means formed by the conveyor belts 24 will be moved, by means of the electromotor 25, at desired places along the path described by the endless carrying means, in order to discharge the objects present on said conveyor belts (24) transversely to the direction of movement of the endsless carrying means 8. In general the construction will be such that when the objects are being received the conveyor belts 24 will be moved along a small distance at a comparatively low speed, whereas the conveyor belts will be moved at a comparatively high speed when the objects are being discharged.

The conveyor belts 24 are only driven intermittently and very briefly during normal operation, however, so that said driving requires comparatively very little energy. It will be possible, however, for the generator 27 to be driven continuously, as long as the carrying means 8 is driven during operation of the device, so that there is amply sufficient time in between the periods when the motor 25 is operated to generate the energy required for operating the motor by means of the generator 27 and supply said energy to the battery or the capacitor 33.

The control mechanism operating the motor 25 can e.g. be activated by means of optical sensors arranged along the path of the carrying means, which optical sensors are arranged along the path travelled by the carrying means, or by feelers arranged along said path and co-operating with the carriers, or by measuring means, which emit signals to the control mechanism 34 in dependence on the path travelled by a relevant carrier 9.

The displacement means formed by the conveyor belt in the embodiment described may also take other forms, of course. Thus it is conceivable to use several belts located side by side, as well as a wipe-off means which is movable to and fro across an upper supporting surface of the carrier 9 intended for accommodating the objects.

Furthermore it is possible to use e.g. a hydraulic pump and a hydraulic motor, possibly with an accumulator arranged therebetween, instead of an electromotor and a generator.

## Claims

1. Conveyor provided with a frame, with an endless carrying means (8) supported by the frame, which can be driven in its longitudinal direction, and with a plurality of carriers (9) coupled to said carrying means, which are each suitable for accommodating one or more objects, and which are each provided with a displacement means (22-24) which can be driven by means of a motor (25) provided on the carrier, and by means of which an object present on a carrier can be moved transversely to the longitudinal direction of the carrying means, characterized in that each carrier (9) is provided with a means (27) generating energy for driving the motor (25), whereby the driving of the energy generating means (27) is effected by the relative movement between the carrier (9) and the frame when the carrying means (8) is being driven.

2. Conveyor according to claim 1, characterized in that the motor (25) is an electromotor and that the energy generating means (27) is a current generator.

3. Conveyor according to claim 2, characterized in that between said electromotor (25) and said current generator (27) there is arranged a battery or capacitor (33) or a similar current accumulating means.

4. Conveyor according to claim 1, characterized in that the motor (25) is a hydraulic motor and that the energy generating means (27) is a hydraulic pump.

5. Conveyor according to claim 4, characterized in that between the pump (27) and the motor (25) there is arranged a fluid accumulator.

6. Conveyor according to any one of the preceding claims, characterized in that the means (27) for generating energy is provided with a wheel (32) connected with said means, said wheel during operation rolling on a guide means for the carrying means.

## Patentansprüche

1. Förderer mit einem Rahmen, einer vom Rahmen gelagerten endlosen Trageinrichtung (8), die in ihrer Längsrichtung angetrieben werden kann, und einer Vielzahl von mit der Trageinrichtung gekoppelten Trägern (9), die jeweils einen oder mehrere Gegenstände aufnehmen können und jeweils mit einer Verschiebungseinrichtung (22 - 24) versehen sind, die durch einen auf dem Träger vorgesehenen Motor (25) angetrieben und mit der ein auf einem Träger vorhandener Gegenstand quer zur Längsrichtung der Trageinrichtung bewegt werden kann, dadurch gekennzeichnet, daß jeder Träger (9) mit einer Einrichtung (27) versehen ist, die Energie zum Antreiben des Motors (25) erzeugt, wobei der Antrieb der Energieerzeugungseinrichtung (27) durch die Relativbewegung zwischen dem Träger (9) und dem Rahmen bewerkstelligt wird, wenn die Trageinrichtung (8) angetrieben wird.

2. Förderer nach Anspruch 1, dadurch gekennzeichnet, daß der Motor (25) ein Elektromotor ist und daß die Energieerzeugungseinrichtung (27) ein Stromerzeuger ist.

3. Förderer nach Anspruch 2, dadurch gekennzeichnet, daß zwischen dem Elektromotor (25) und dem Stromerzeuger (27) eine Batterie oder ein Kondensator (33) oder eine ensprechende Stromspeichereinrichtung angeordnet ist.

4. Förderer nach Anspruch 1, dadurch gekennzeichnet, daß der Motor (25) ein Hydraulikmotor ist und daß die Energieerzeugungseinrichtung (27) eine Hydraulikpumpe ist.

5. Förderer nach Anspruch 4, dadurch gekennzeichnet, daß zwischen der Pumpe (27) und dem Motor (25) ein Strömungsmittelspeicher angeordnet ist.

6. Förderer nach einem der vorangehenden Ansprüche, dadurch gekennzeichnet, daß die Einrichtung (27) zur Erzeugung von Energie mit einem mit der Einrichtung verbundenen Rad (32) versehen ist, das während des Betriebes auf einer Führungseinrichtung für die Trageinrichtung rollt.

**Revendications**

1. Convoyeur équipé d'un châssis, comportant des moyens de support sans fin (8), supportés par le châssis et qui peuvent être entraînés dans leur direction longitudinale, et une pluralité de supports (9) accouplés auxdits moyens de support et qui sont appropriés, chacun, pour recevoir un ou plusieurs objets et sont équipés chacun de moyens de déplacement (22-24) qui peuvent être entraînés par un moteur (25) prévu sur le support et au moyen desquels un objet présent sur un support peut être déplacé transversalement par rapport à la direction longitudinale des moyens de support, caractérisé en ce que chaque support (9) est équipé de moyens (27) produisant une énergie pour entraîner le moteur (25), l'entraînement des moyens de production d'énergie (27) étant réalisé au moyen du déplacement relatif entre le support (9) et le châssis lorsque les moyens de support (8) sont entraînés.

2. Convoyeur selon la revendication 1, caractérisé en ce que le moteur (25) est un moteur électrique et que lesdits moyens de production d'énergie (27) sont formés par un générateur de courant.

3. Convoyeur selon la revendication 2, caractérisé en ce qu'entre ledit moteur électrique (25) et ledit générateur de courant (27) est disposé une batterie ou un condensateur (33) ou un moyen similaire d'accumulation de courant.

4. Convoyeur selon la revendication 1, caractérisé en ce que le moteur (25) est un moteur hydraulique et que les moyens de production d'énergie (27) sont une pompe hydraulique.

5. Convoyeur selon la revendication 4, caractérisé en ce qu'un accumulateur fluidique est disposé entre la pompe (27) et le moteur (25).

6. Convoyeur selon l'une quelconque des revendications précédentes, caractérisé en ce que les moyens de production d'énergie (27) sont équipés d'une roue (32) raccordée auxdits moyens, ladite roue roulant, pendant le fonctionnement, sur des moyens de guidage prévus pour les moyens de support.

*Fig.1.*

Fig.2.

Fig.3.